# EUROPEAN PATENT SPECIFICATION

(11) **EP 2 573 246 B1**
(45) Date of publication and mention of the grant of the patent: **09.11.2016**
(21) Application number: 12179195.8
(22) Date of filing: 03.08.2012
(51) Int. Cl.: D06F 58/24

(54) **Electrical household appliance**
Elektrisches Haushaltsgerät
Appareil électroménager

(30) Priority: 05.08.2011 IT RN20110054
(43) Date of publication of application: 27.03.2013
(73) Proprietor: Indesit Company S.p.A., 60044 Fabriano (AN) (IT)
(72) Inventor: Duri, Sandro, 62025 Fiuminata (MC) (IT); Liberatore, Aldo, 67035 Pratola Peligna (AQ) (IT)
(74) Representative: Guerci, Alessandro

(56) References cited:
- EP-A1- 0 477 554
- EP-A1- 2 241 663
- EP-A2- 1 029 961

## Description

The present invention relates to an electrical household appliance for drying items such as laundry or dishes. The electrical household appliance could also be a washer-dryer or a dishwasher in which prior to the drying action there is envisaged a washing action.

An electrical household drying appliance in which there is a plastic duct extending between a compartment for drying the laundry and an impeller that extracts moist air from the compartment is well known.

Along the inner surface of said duct there are a plurality of outlets for the cooling water coming from the mains water supply. The cooling water sprayed inside the duct causes the condensation of part of the moisture present in the air extracted from the drying compartment.

The cooling water and condensed steam will flow by gravity toward a common drainage conduit that enables it to be extracted from the duct and conveyed toward a drain.

A drawback of this constructive solution is tied to problems of an economic nature tied to the high consumption of cooling water (which is precisely water in order to contain the costs of the washing liquid). A further drawback is tied to the fact that there is a high consumption of an environmental resource (water, precisely).

Document EP2241663A1 discloses a washing-drying machine for performing washing and drying operations, having an articles storing chamber connected to water/air heat exchanger; the machine improves energy efficiency, and saves water and energy during washing and drying operations.

In this context, the technical task at the basis of the present invention is to propose an electrical household appliance which overcomes the above-mentioned drawbacks of the prior art.

In particular, it is an object of the present invention to provide an electrical household appliance capable of reducing operating costs. A further object is to minimise the consumption of environmental resources.

The stated technical task and the specified objects are substantially achieved by an electrical household appliance comprising the technical features set forth in one or more of the appended claims.

Additional features and advantages of the present invention will be more apparent from the approximate, and hence non-restrictive description of a preferred but non-exclusive embodiment of an electrical household appliance, as illustrated in the appended drawings, in which:
- figure 1 shows a schematic side view of an electrical household appliance according to the present invention;
- figure 2 shows a rear perspective view of components of an electrical household appliance according to the present invention;

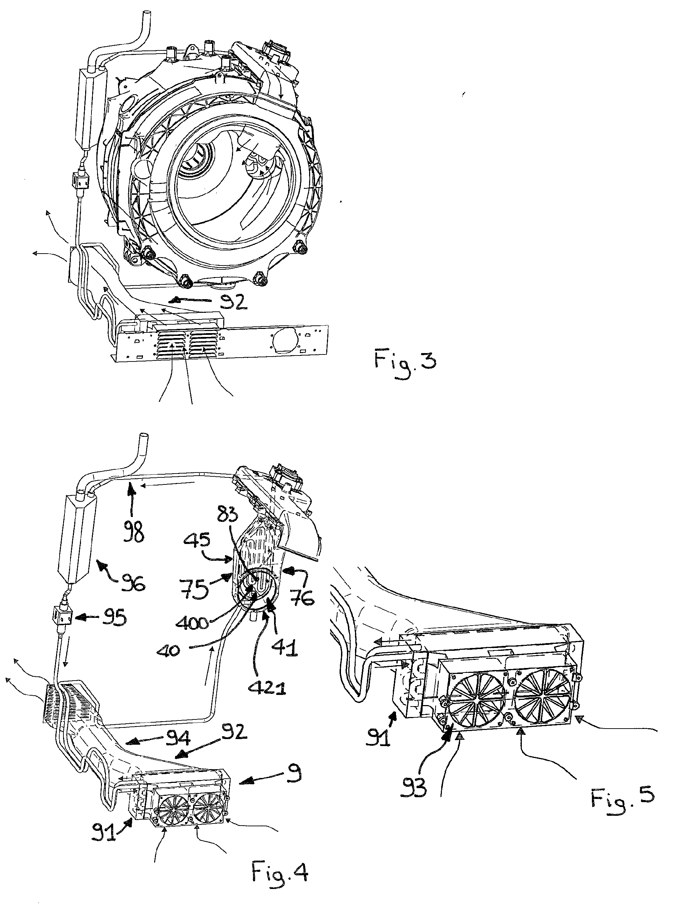

- figure 3 shows a front perspective view of components of an electrical household appliance according to the present invention;
- figures 4 and 6 show two perspective views of functional components of the electrical household appliance according to the present invention;
- figure 5 shows an enlarged detail of figure 4.

In the appended drawings, the reference number 1 indicates an electrical household appliance for drying items (for example laundry or dishes). Examples of electrical household appliances capable of performing this function are: dryers, washer-dryers (in which in addition to the possibility of drying, there is also provided the possibility of washing the laundry), and dishwashers (incorporating means for drying the dishes which are usually actuated after washing). In the appended figures a washer-dryer is illustrated by way of example.

The electrical household appliance 1 comprises:
i) a compartment 2 for drying said items;
ii) a conduit 3 for discharging a gaseous fluid from the drying compartment 2 (typically the gaseous fluid is moist air).

Conveniently, the discharging conduit 3 is at least in part operatively interposed between said drying compartment 2 and an impeller 5 which draws the gaseous fluid (typically moist air) from the drying compartment 2. Downstream of the impeller 5, the gaseous fluid is advantageously heated, for example by means of a resistor, and reintroduced into the drying compartment 2. Conveniently, the drying compartment 2 is in part delimited by a door 6 for accessing the drying compartment 2 and a wall 60 opposite the door 6. In the non-restrictive example embodiment illustrated in the appended figures, the discharging conduit 3 extends from said wall 60 opposite the door 6. The discharging conduit 3 reintroduces the gaseous fluid into the drying compartment 2 in a front portion of the drying compartment 2 (in proximity to the door 6). The gaseous fluid from which the moisture was removed and conveniently heated is thus reused to dry the items.

The electrical household appliance 1 comprises a path 8 for conveying a coolant.

Conveniently, the electrical household appliance 1 comprises a condenser 4 in which there is an exchange of heat between the discharging conduit 3 and the path 8 for conveying the coolant. The condenser 4 permits the condensation of at least a part of the steam present in the gaseous fluid. Conveniently, the condenser 4 is constrained to at least one wall delimiting the drying compartment 2 (typically the wall 60 opposite the door 6). The impeller 5 is preferably situated downstream of the condenser 4 and upstream of the drying compartment 2 relative to the direction of flow of the coolant.

The condenser 4 comprises:
- an area 41 for passage of the gaseous fluid arriving from the drying compartment 2; said area 41 for passage of the gaseous fluid is integrated in the conduit 3 for discharging the gaseous fluid;
- a channel 42 for passage of a coolant; the channel 42 for passage of the coolant is integrated in the path 8 for conveying the coolant. Typically the coolant is liquid, in particular it is water (possibly supplemented with chemical additives). The path 8 for conveying the coolant comprises a circuit that extends along a closed line. The circuit in turn integrates said channel 42 for passage of the coolant to allow at least partial recirculation of the coolant. The circuit is thus a recirculation circuit. Conveniently, the path 8 for conveying the coolant is a circuit closed back on itself. Being a closed circuit, the coolant is recirculated. Consequently, as the fluid is substantially always the same, a specific fluid could also be used while in any case containing costs: for example, a fluid that optimises the heat exchange or reduces scale could be used. Conveniently, the discharging conduit 3 in combination with the drying compartment 2 also forms a circuit closed back on itself. The conveying path 8 is fluid dynamically isolated from the discharging conduit 3. In particular, the conveying path 8 comprises a coolant duct 98 closed back on itself. This enables continuous recycling of the coolant, thus avoiding the waste of water, with advantages both in terms of environmental impact and in terms of cost. Moreover, this makes use of the electrical household appliance possible in the absence of a nearby connection to the mains water supply. Conveniently, the condenser 4 comprises a first condensation area 40 (typically a first condensation wall 400). At least a part of the first condensation area 40 separates the area 41 for passage of the gaseous fluid from a first stretch 81 of the channel 42 for passage of the coolant. The features attributed hereunder to the first condensation wall 400 can be repeated for the first condensation area 40 and vice versa. Conveniently, the first condensation wall 400 and the first condensation area 40 coincide. Conveniently, the first condensation wall 400 extends for a length greater than 5 centimetres along the line of extension of the first stretch 81 of the channel 42 for passage of the coolant. The condensation wall 400 contributes to shaping the area 41 for passage of the gaseous fluid and the first stretch of the channel 42 for passage of the coolant. The first condensation wall 400 thus touches the area 41 for passage of the gaseous fluid and the first stretch 81 of the channel 42 for passage of the coolant. The first condensation wall 400 usually has a thickness of less than 3 millimetres. Conveniently, the condensation wall 40 is metallic.

Conveniently, the first stretch 81 of the channel 42 for passage of the coolant extends substantially alongside the area 41 for passage of the gaseous fluid. Conveniently, the first stretch 81 of the channel 42 for passage of the coolant is serpentine. This enables the heat exchange with the gaseous fluid to be improved considerably.

Conveniently, the first condensation wall 400 extends substantially parallel to a plane. Preferably, the first condensation wall 400 is planar.

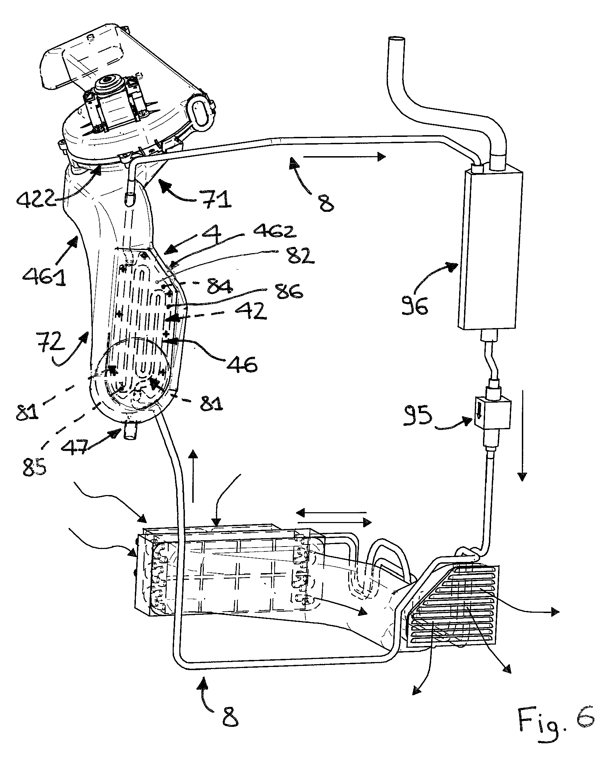

The first stretch 81 of the channel 42 for passage of the coolant extends substantially parallel to a plane. In the preferred embodiment, the condenser 4 comprises a first and second metal sheet 83, 84, superposed and comprising a first portion 85 in which the first and the second sheet 83, 84 are joined together and a second portion 86 in which the first and the second sheet 83, 84 are spaced apart so as to form interposed between them the first stretch 81 of the channel 42 for passage of the coolant. In the first portion 85 the first and the second sheet 83, 84 are joined together and could be indistinguishable. The first and the second metal sheet 83, 84 are irremovably joined to each other (according to a technique known as "roll bonding"). They are preferably made of aluminium. The first stretch 81 of the channel 42 can include a plurality of sections extending vertically or horizontally side by side and connected to one another so as to form a serpentine path (see for example figure 6). Conveniently, the condenser 4 comprises a shell 461. Conveniently, the shell 461 comprises a cover 462 blocking off a slot for introducing at least the first condensation wall 400. Advantageously, the condenser 4 comprises a second condensation area 82. The first and the second condensation area 40, 82 lie on two opposite walls of a body in which said first stretch 81 of the channel 42 for passage of the coolant is formed. In particular, the area 41 for passage of the gaseous fluid touches both the first and the second metal sheet 83, 84. At least a part of the first condensation area 40 is integrated in said first sheet 83, at least a part of said second condensation area 82 being integrated in the second sheet 84.

The first stretch 81 of the channel 42 for passage of the coolant is interposed between two parts of the area 41 for passage of the gaseous fluid.

The area 41 for passage of the gaseous fluid, downstream of an inlet of said condenser 4, includes a ramification induced by the presence of said body in which the first stretch 81 of the channel 42 for passage of the coolant is formed. Conveniently, the area 41 for passage of the gaseous fluid comprises a reconvergence downstream of said body and upstream of an outlet of said condenser 4. Conveniently, the second condensation area 82 is a second condensation wall.

Conveniently, the passage area 41 comprises two main sections 71, 72 transverse to each other (for example, substantially orthogonal). The channel 42 for passage of the coolant extends along only one of the two main sections.

Conveniently, the shell 461 comprises an external delimiting surface 45 in turn comprising:
- a first and a second face 73, 74 which are opposed;
- two sides 75, 76, opposed and interposed between the first and the second face 73, 74.

Conveniently, said area 41 for passage of the gaseous fluid touches a wall comprising the first face 73 and a wall comprising the second face 74.

The shell 461 comprises:
- an inlet 421 for said gaseous fluid extracted from the drying compartment 2;
- an outlet 422 for said gaseous fluid. Conveniently, the inlet 421 and the outlet 422 are formed in a same piece of said shell 461 (said piece is thus a single body and not assembled).

In the preferred embodiment, the electrical household appliance 1 is a washer-dryer or a dishwasher in which said drying compartment 2 coincides with a washing compartment 2.

In the washing compartment 2 a washing treatment is thus carried out by the electrical household appliance 1 in addition to drying. In the case of a washer-dryer, a rotating basket is typically placed inside the washing compartment 2. In the case of a dishwasher at least one extractible rack for positioning the dishes is conveniently present.

The electrical household appliance 1 comprises means 9 for drawing air from outside the electrical household appliance 1. Typically, but not necessarily, the air is drawn from a front face of the electrical household appliance (the front face is the one comprising the door 6). This minimises the risk of there being obstructions that impede drawing air.

The drawing means 9 further comprise a heat exchanger 91 which places in thermal communication a stretch of the path 8 for conveying the coolant and the air drawn by the drawing means 9. The outside air is thus used to cool the coolant which has been heated after removing heat from the moist gaseous fluid discharged from the drying compartment 2.

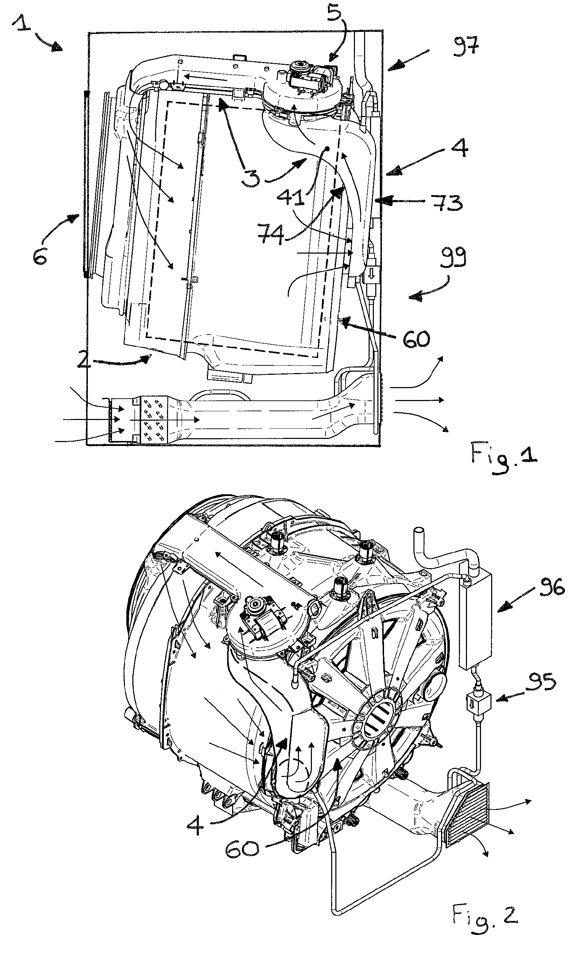

The drawing means 9 comprise:
- means 92 for conveying air in turn comprising a conveying duct 94;
- a fan 93 for moving the air along said conveying duct 94. Conveniently, there could be two fans operating in parallel and placed side by side. In the non-restrictive example embodiment of figure 2, along the direction of flow imposed by the drawing means 9, the fan 93 is situated upstream of the heat exchanger 91. Conveniently, the electrical household appliance 1 comprises a main machine body 97, which forms the outer casing thereof.

In a first unillustrated constructive solution, the conveying duct 94 leads to the inside of the machine body 97.

In a second constructive solution the conveying duct 94 leads to the outside of the machine body 97. Advantageously, in such a case, it leads out from a rear face 99 of the electrical household appliance 1 (typically a face of the electrical household appliance which is opposite the one comprising the door 6). In the latter case, the air exits from the machine body 97 after having passed through the heat exchanger 91.

The electrical household appliance 1 comprises means 95 for moving the coolant positioned along the path 8 for conveying the coolant. The coolant can be liquid or gaseous. The coolant is usually liquid and the movement means 95 typically comprise a pump; if the coolant is gaseous, the movement means 95 could comprise a compressor.

The electrical household appliance 1 comprises a storage vessel 96 designed to accommodate said coolant and positioned along the path 8 for conveying the coolant. The vessel 96 is used, for example, to allow the coolant to be initially introduced into the conveying path 8 from the outside (this operation is carried out prior to use).

Conveniently, the vessel 96 is positioned downstream of said condenser 4 and upstream of said movement means 95 along the direction of flow of the coolant.

In the example embodiment illustrated in the appended figures, the heat exchanger 91 is positioned downstream of said movement means 95 and upstream of said condenser 4 along the direction of flow of the coolant. Conveniently, the electrical household appliance 1 comprises a channel 47 for draining the condensation, the channel 47 being outside the area 41 for passage of the gaseous fluid. The draining channel 47 places the area 41 for passage of the gaseous fluid in fluid communication with the washing compartment 2. This also enables the condensation that forms in the condenser 4 to be discharged through drainage means used for discharging the washing liquid (previously used). Alternatively, the condensation can return into the drying compartment 2 through a connecting interface between the discharging conduit 3 and the drying compartment 2 (the interface is said inlet 421 which enables the gaseous fluid to be extracted from the drying compartment 2). In this case, advantageously, a lower portion of the shell 461 forms a condensation collection receptacle, above which the inlet 421 is positioned. When the level of condensation in the collection receptacle rises above the lower edge of the inlet 421, the condensation overflows into the drying compartment 2.

In general, the condensation can be discharged from the drying compartment 2 by drainage means used for discharging the washing liquid of the electrical household appliance.

The invention thus conceived enables many advantages to be obtained.

In particular, it allows reducing the consumption of a coolant. This enables costs savings to be obtained (and if the coolant is water it also enables conservation of an increasingly precious natural resource). Moreover, as the circuit is closed (and substantially waste free), there is the possibility of using a coolant having physicochemical properties which make it perform particularly well in the heat exchange (even if it is more costly than water).

## Claims

1. An electrical household appliance for drying items comprising:
i) a compartment (2) for drying the items;
ii) a conduit (3) for discharging a gaseous fluid from the drying compartment (2);
iii) a path (8) for conveying a coolant;
iv) a condenser (4) in which there is a heat exchange between the discharging conduit (3) and the path for conveying the coolant, the condenser (4) allowing the condensation of at least a part of the steam present in the gaseous fluid,
the condenser (4) comprising:
- an area (41) for passage of the gaseous fluid arriving from the drying compartment (2), the area (41) for passage of the gaseous fluid arriving from the drying compartment (2) being integrated in the conduit (3) for discharging the gaseous fluid;
- a channel (42) for passage of a coolant, the channel (42) for passage of the coolant being integrated in the path (8) for conveying a coolant;
wherein the path (8) for conveying a coolant comprises a circuit extending along a closed line, the circuit in turn integrating the channel (42) for passage of the coolant to allow at least partly recirculating the coolant;
v) means (9) for drawing air from the outside of the electrical household appliance (1);
**characterised in that** said electrical household appliance further comprises a heat exchanger (91) placing in thermal communication a stretch of the path (8) for conveying the coolant and the air drawn by the drawing means (9).

2. The electrical household appliance according to claim 1, **characterised in that** the condenser (4) comprises a first condensation area (40), at least a part of the first condensation area (40) separating the area (41) for passage of the gaseous fluid from a first stretch (81) of the channel (42) for passage of the coolant.

3. The electrical household appliance according to claim 2, **characterised in that** the first condensation area (40) is a condensation wall (400).

4. The electrical household appliance according to claim 2 or 3, **characterised in that** the first stretch (81) of the channel (42) for passage of the coolant extends substantially alongside a part of the area (41) for passage of the gaseous fluid.

5. The electrical household appliance according to any of the foregoing claims from 2 to 4, **characterised in that** the condenser (4) comprises a first and a second metal sheet (83, 84) superposed and comprising a first portion (85) in which the first and the second sheet (83, 84) are joined together and a second portion (86) in which the first and the second sheet (83, 84) are spaced apart for forming between them interposed the first stretch (81) of the channel (42) for passage of the coolant.

6. The electrical household appliance according to claim 5, **characterised in that** the condenser (4) comprises a second condensation area (82); the area (41) for passage of the coolant touching both the first and the second sheet (83, 84); at least one part of the first condensation area (40) being integrated in the first sheet (83), at least a part of the second condensation area (82) being integrated in the second sheet (84).

7. The electrical household appliance according to claim 1, **characterised in that** the drawing means (9) comprise:
- means (92) for conveying air in turn comprising a conveying duct (94);
- a fan (93) for moving the air along the conveying duct (94).

8. The electrical household appliance according to claim 7, **characterised in that** it comprises a main machine body (97); the conveying duct (94) leading to the inside of the machine body (97).

9. The electrical household appliance according to claim 7, **characterised in that** it comprises a main machine body (97), the conveying duct (94) discharging the air outside the machine body (97).

10. The electrical household appliance according to any of the foregoing claims, **characterised in that** it comprises means (95) for moving the coolant positioned along the path (8) for conveying the coolant, the coolant being liquid or gaseous.

11. The electrical household appliance according to claim 10, **characterised in that** the heat exchanger (91) is positioned downstream of the movement means (95) and upstream of the condenser (4) along the direction of flow of the coolant.

12. The electrical household appliance according to any of the foregoing claims, **characterised in that** it comprises a storage vessel (96) designed to accommodate the coolant and positioned along the channel (42) for passage of the coolant.

13. The electrical household appliance according to any of the foregoing claims, **characterised in that** it is a washer-dryer or a dishwasher in which the drying compartment (2) coincides with a washing compartment (2); the washer-dryer or the dishwasher comprising a channel (47) for draining the condensation, this channel (47) for draining the condensation being outside the area (41) for passage of the gaseous fluid and placing the area (41) for passage of the gaseous fluid in fluid communication with the washing compartment (2).

14. The electrical household appliance according to any of the foregoing claims, **characterised in that** the conveying path (8) comprises a coolant duct (98) closed back on itself.

## Patentansprüche

1. Ein elektrisches Haushaltsgerät zum Trocknen von Gegenständen, aufweisend:
i) Ein Fach (2) zur Trocknen der Gegenstände;
ii) Eine Leitung (3) zum Auslassen eines gasförmigen Fluids aus dem Trocknungsfach (2);
iii) Eine Bahn (8) zum Fördern eines Kühlmittels;
iv) Einen Kondensator (4) in welchem ein Wärmeaustausch zwischen der Auslassleitung (3) und der Bahn zum Fördern des Kühlmittels stattfindet, welcher Kondensator (4) das Verflüssigen mindestens eines Teils des Dampfes, der in dem gasförmigen Fluid vorliegt, ermöglicht,
wobei der Kondensator (4) aufweist:
- Ein Gebiet (41) zum Durchlauf des gasförmigen Fluids, das von dem Trocknungsfach (2) her eintrifft, welches Gebiet (41) für den Durchlauf des gasförmigen Fluids, das von dem Trocknungsfach (2) her eintrifft, in die Leitung (3) zum Auslassen des gasförmigen Fluids integriert ist;
- Einen Kanal (42) zum Durchlauf eines Kühlmittels, welcher Kanal (42) zum Durchlauf des Kühlmittels in die Bahn (8) zum Fördern eines Kühlmittels integriert ist;
wobei die Bahn (8) zum Fördern eines Kühlmittels einen Kreislauf aufweist, der sich entlang einer geschlossenen Linie erstreckt, welcher Kreislauf wiederum den Kanal (42) zum Durchlauf des Kühlmittels integriert, um zumindest teilweise ein Rezirkulieren des Kühlmittels zu ermöglichen;
v) Mittel (9) zum Beziehen von Luft von außerhalb des elektrischen Haushaltsgeräts (1);
**dadurch gekennzeichnet, dass** das genannte elektrische Haushaltsgerät ferner einen Wärmetauscher (91) aufweist, der einen Abschnitt der Bahn (8) zum Fördern des Kühlmittels und die von den Beziehmitteln (9) bezogene Luft in Wärmeverbindung setzt.

2. Das elektrische Haushaltsgerät nach Anspruch 1, **dadurch gekennzeichnet, dass** der Kondensator (4) ein erstes Verflüssigungsgebiet (40) aufweist, wobei mindestens ein Teil des ersten Verflüssigungsgebiets (40) das Gebiet (41) zum Durchlauf des gasförmigen Fluids von einem ersten Abschnitt (81) des Kanals (42) zum Durchlauf des Kühlmittels trennt.

3. Das elektrische Haushaltsgerät nach Anspruch 2, **dadurch gekennzeichnet, dass** das erste Verflüssigungsgebiet (40) eine Verflüssigungswand (400) ist.

4. Das elektrische Haushaltsgerät nach Anspruch 2 oder 3, **dadurch gekennzeichnet, dass** der erste Abschnitt (81) des Kanals (42) zum Durchlauf des Kühlmittels sich im Wesentlichen entlang eines Teils des Gebiets (41) zum Durchlauf des gasförmigen Fluids erstreckt.

5. Das elektrische Haushaltsgerät nach einem der voranstehenden Ansprüche von 2 bis 4, **dadurch gekennzeichnet, dass** der Kondensator (4) ein erstes und ein zweites Metallblech (83, 84) aufweist, die überlagert sind und einen ersten Bereich (85) aufweisen, in welchen das erste und das zweite Blech (83, 84) miteinander verbunden sind, und einen zweiten Bereich (86), in welchem das erste und das zweite Blech (83, 84) von einander beabstandet sind, um zwischen ihnen liegend den ersten Abschnitt (81) des Kanals (42) zum Durchlauf des Kühlmittels zu bilden.

6. Das elektrische Haushaltsgerät nach Anspruch 5, **dadurch gekennzeichnet, dass** der Kondensator (4) ein zweites Verflüssigungsgebiet (82) aufweist; wobei das Gebiet (41) zum Durchlauf des Kühlmittels sowohl das erste als auch das zweite Blech (83, 84) berührt; wobei mindestens ein Teil des ersten Verflüssigungsgebiets (40) in das erste Blech (83) integriert ist und mindestens ein Teil des zweiten Verflüssigungsgebiets (82) in das zweite Blech (84) integriert ist.

7. Das elektrische Haushaltsgerät nach Anspruch 1, **dadurch gekennzeichnet, dass** die Beziehmittel (9) aufweisen:
- Mittel (92) zum Fördern von Luft, die wiederum eine Förderröhre (94) aufweisen;
- Ein Flügelrad (93) zum Bewegen der Luft entlang der Förderröhre (94).

8. Das elektrische Haushaltsgerät nach Anspruch 7, **dadurch gekennzeichnet, dass** es einen Hauptmaschinenkörper (97) aufweist; wobei die Förderröhre (94) in das Innere des Maschinenkörpers (97) führt.

9. Das elektrische Haushaltsgerät nach Anspruch 7, **dadurch gekennzeichnet, dass** es einen Hauptmaschinenkörper (97) aufweist; wobei die Förderröhre (94) die Luft außerhalb des Maschinenkörpers (97) auslässt.

10. Das elektrische Haushaltsgerät nach einem der voranstehenden Ansprüche, **dadurch gekennzeichnet, dass** es Mittel (95) zum Bewegen des Kühlmittels aufweist, die entlang der Bahn (8) zum Fördern des Kühlmittels positioniert sind, wobei das Kühlmittel flüssig oder gasförmig ist.

11. Das elektrische Haushaltsgerät nach Anspruch 10, **dadurch gekennzeichnet, dass** der Wärmetauscher (91) entlang der Flussrichtung des Kühlmittels stromabwärts der Bewegungsmittel (95) und stromaufwärts des Kondensators (4) positioniert ist.

12. Das elektrische Haushaltsgerät nach einem der voranstehenden Ansprüche, **dadurch gekennzeichnet, dass** es ein Speichergefäß (96) aufweist, das ausgelegt ist, um das Kühlmittel unterzubringen, und entlang des Kanals (42) zum Durchlauf eines Kühlmittels positioniert ist.

13. Das elektrische Haushaltsgerät nach einem der voranstehenden Ansprüche, **dadurch gekennzeichnet, dass** es ein Waschtrockner oder ein Geschirrspüler ist, in welchem das Trocknungsfach (2) mit einem Waschfach (2) zusammenfällt; wobei der ein Waschtrockner oder der Geschirrspüler einen Kanal (47) zum Drainieren des Kondensats aufweist, wobei dieser Kanal (47) zum Drainieren des Kondensats sich außerhalb des Gebiets (41) zum Durchlauf des gasförmigen Fluids befindet, und das Gebiet (41) zum Durchlauf des gasförmigen Fluids in Fluidverbindung mit dem Waschfach (2) setzt.

14. Das elektrische Haushaltsgerät nach einem der voranstehenden Ansprüche, **dadurch gekennzeichnet, dass** die Förderbahn (8) eine Kühlmittelröhre (98) aufweist, die zurück auf sich selbst geschlossen ist.

## Revendications

1. Appareil d'électroménager pour sécher des articles comprenant :
i) un compartiment (2) pour sécher les articles ;
ii) un conduit (3) pour décharger un fluide gazeux depuis le compartiment de séchage(2);
iii) un chemin (8) pour transporter un agent de refroidissement ;
iv) un condenseur (4) dans lequel il y a un échange thermique entre le conduit de décharge (3) et le chemin pour transporter l'agent de refroidissement, le condenseur (4) permettant la condensation d'au moins une partie de la vapeur présente dans le fluide gazeux,
le condenseur (4) comprenant :
- une zone (41) pour le passage du fluide gazeux provenant du compartiment de séchage (2), la zone (41) pour le passage du fluide gazeux provenant du compartiment de séchage (2) étant intégrée dans le conduit (3) pour décharger le fluide gazeux ;
- un canal (42) pour le passage d'un agent de refroidissement, le canal (42) pour le passage de l'agent de refroidissement étant intégré dans le chemin (8) pour transporter un agent de refroidissement ;
dans lequel le chemin (8) pour transporter un agent de refroidissement comprend un circuit s'étendant le long d'une ligne fermée, le circuit intégrant à son tour le canal (42) pour le passage de l'agent de refroidissement pour permettre de recycler au moins partiellement l'agent de refroidissement ;
v) un moyen (9) pour tirer de l'air depuis l'extérieur de l'appareil d'électroménager (1) ;
**caractérisé en ce que** ledit appareil d'électroménager comprend en outre un échangeur thermique (91) plaçant en communication thermique un bout du chemin (8) pour transporter l'agent de refroidissement et l'air tiré par le moyen de tirage (9).

2. Appareil d'électroménager selon la revendication 1, **caractérisé en ce que** le condenseur (4) comprend une première zone de condensation (40), au moins une partie de la première zone de condensation (40) séparant la zone (41) pour le passage du fluide gazeux d'un premier bout (81) du canal (42) pour le passage de l'agent de refroidissement.

3. Appareil d'électroménager selon la revendication 2, **caractérisé en ce que** la première zone de condensation (40) est une paroi de condensation (400).

4. Appareil d'électroménager selon la revendication 2 ou 3, **caractérisé en ce que** le premier bout (81) du canal (42) pour le passage de l'agent de refroidissement s'étend sensiblement à côté d'une partie de la zone (41) pour le passage du fluide gazeux.

5. Appareil d'électroménager selon l'une quelconque des revendications précédentes 2 à 4, **caractérisé en ce que** le condenseur (4) comprend une première et une seconde tôle de métal (83, 84) superposées et comprenant une première partie (85) dans laquelle les première et seconde tôles (83, 84) sont jointes ensemble et une seconde partie (86) dans laquelle les première et seconde tôles (83, 84) sont espacées pour former entre elles de façon interposée le premier bout (81) du canal (42) pour le passage de l'agent de refroidissement.

6. Appareil d'électroménager selon la revendication 5, **caractérisé en ce que** le condenseur (4) comprend une seconde zone de condensation (82) ; la zone (41) pour passage de l'agent de refroidissement touchant tant la première que la seconde tôle (83, 84) ; au moins une partie de la première zone de condensation (40) étant intégrée dans la première tôle (83), au moins une partie de la seconde zone de condensation (82) étant intégrée dans la seconde tôle (84).

7. Appareil d'électroménager selon la revendication 1, **caractérisé en ce que** le moyen de tirage (9) comprend :
- un moyen (92) pour transporter de l'air comprenant à son tour un conduit de transport (94) ;
- un ventilateur (93) pour déplacer l'air le long du conduit de transport (94).

8. Appareil d'électroménager selon la revendication 7, **caractérisé en ce qu'**il comprend un corps de machine principal (97) ; le conduit de transport (94) conduisant à l'intérieur du corps de machine (97).

9. Appareil d'électroménager selon la revendication 7, **caractérisé en ce qu'**il comprend un corps de machine principal (97), le conduit de transport (94) décharge l'air à l'extérieur du corps de machine (97).

10. Appareil d'électroménager selon l'une quelconque des revendications précédentes, **caractérisé en ce qu'**il comprend un moyen (95) pour déplacer l'agent de refroidissement positionné le long du chemin (8) pour transporter l'agent de refroidissement, l'agent de refroidissement étant liquide ou gazeux.

11. Appareil d'électroménager selon la revendication 10, **caractérisé en ce que** l'échangeur thermique (91) est positionné en aval du moyen de déplacement (95) et en amont du condenseur (4) le long de la direction de flux de l'agent de refroidissement.

12. Appareil d'électroménager selon l'une quelconque des revendications précédentes, **caractérisé en ce qu'**il comprend un récipient de stockage (96) conçu pour loger l'agent de refroidissement et positionné le long du canal (42) pour le passage de l'agent de refroidissement.

13. Appareil d'électroménager selon l'une quelconque des revendications précédentes, **caractérisé en ce que** c'est une machine lavante-séchante ou un lave-vaisselle dans lequel le compartiment de séchage (2) coïncide avec un compartiment de lavage (2) ; la machine lavante-séchante ou le lave-vaisselle comprenant un canal (47) pour drainer la condensation, ce canal (47) pour drainer la condensation étant à l'extérieur de la zone (41) pour le passage du fluide gazeux et placer la zone (41) pour le passage du fluide gazeux en communication à fluide avec le compartiment de lavage (2).

14. Appareil d'électroménager selon l'une quelconque des revendications précédentes, **caractérisé en ce que** le chemin de transport (8) comprend un conduit d'agent de refroidissement (98) fermé en retour sur lui-même.
